# EUROPEAN PATENT SPECIFICATION

(11) **EP 1 188 659 B1**
(45) Date of publication and mention of the grant of the patent: **31.10.2007**
(21) Application number: 01122154.6
(22) Date of filing: 14.09.2001
(51) Int. Cl.: B62M 23/02, B62J 9/00, H01M 2/10

(54) **Motor-assisted bicycle with a battery containing box**
Fahrrad mit Hilfsmotor und einem Behälter zur Aufnahme einer Batterie
Bicyclette à assistance motorisée avec une boîte pour une batterie

(30) Priority: 14.09.2000 JP 2000280508; 14.12.2000 JP 2000380926; 20.12.2000 JP 2000387815
(43) Date of publication of application: 20.03.2002
(73) Proprietor: HONDA GIKEN KOGYO KABUSHIKI KAISHA, Minato-ku, Tokyo (JP)
(72) Inventor: Nakagomi, Yoshio, Wako-shi, Saitama (JP); Maruyama, Tomoyuki, Wako-shi, Saitama (JP); Nagura, Hidenori, Wako-shi, Saitama (JP); Shimmura, Hiroyuki, Wako-shi, Saitama (JP); Iseno, Mitsuru, Wako-shi, Saitama (JP); Endo, Taro, Wako-shi, Saitama (JP); Kashima, Hajime, Wako-shi, Saitama (JP)
(74) Representative: Liska, Horst

(56) References cited:
- EP-A- 0 499 035
- EP-A- 0 573 064
- EP-A- 0 728 662
- EP-A- 0 798 792
- EP-A- 0 818 385
- EP-A- 0 865 984
- EP-A- 0 905 014
- WO-A-94/26559
- GB-A- 2 047 948
- GB-A- 2 112 754
- US-A- 2 397 115
- US-A- 4 634 642
- US-A- 4 752 543
- US-A- 5 637 420
- US-A- 5 842 535
- US-A- 6 022 638
- US-A- 6 117 588
- PATENT ABSTRACTS OF JAPAN vol. 1999, no. 04, 30 April 1999 (1999-04-30) & JP 11 003693 A (HONDA MOTOR CO LTD), 6 January 1999 (1999-01-06)
- PATENT ABSTRACTS OF JAPAN vol. 0181, no. 36 (M-1572), 7 March 1994 (1994-03-07) & JP 05 319104 A (YAMAHA MOTOR CO LTD), 3 December 1993 (1993-12-03)

## Description

The present invention relates to a motor-assisted bicycle having a box for containing a battery, and particularly to a motor-assisted bicycle having a box for containing a battery, which has a structure for covering mounting portions for mounting the battery box to a vehicular body.

A motor-assisted bicycle having a box for containing a battery according to the preamble of claim 1 is known from US-A-2 397 115.

EP 0 818 385 A2 discloses a device for containing a battery having mounting portions for connecting a box main body and a vehicular body which are formed at the bottom or on the back side of the battery-containing device.

EP 0 728 662 A2 discloses mounting portions for connecting a box main body and a vehicular body which are formed orthogonally to the plane of the upper opening of the box main body and outside the area covered by an upper lid.

EP 1 184 274 A2 and EP 1 193 170 A1, which have to be considered as state of the art pursuant to Article 54(3) and (4) EPC as far as the same contracting states are designated, disclose a motor-assisted bicycle comprising a box for containing a battery, the box having flanges which are formed in the plane of the upper opening of the box.

A further known motor-assisted bicycle includes a man-power drive system for transmitting a leg-power applied to pedals to a rear wheel, and a motor drive system capable of adding an assist power to the above man-power drive system. A battery mounted on a motor-assisted bicycle as a power source for a motor is generally put in a resin case for easy handling. Such a battery may be desirable to take measures to prevent the resin case from being contaminated or damaged or from being stolen. For example, Japanese Patent Laid-open No. Hei 8-142955 has described a battery containing device including a battery contained in an inner box, wherein the battery is removably contained in an outer box fixed to a vehicular body, to thereby prevent the inner box from being contaminated.

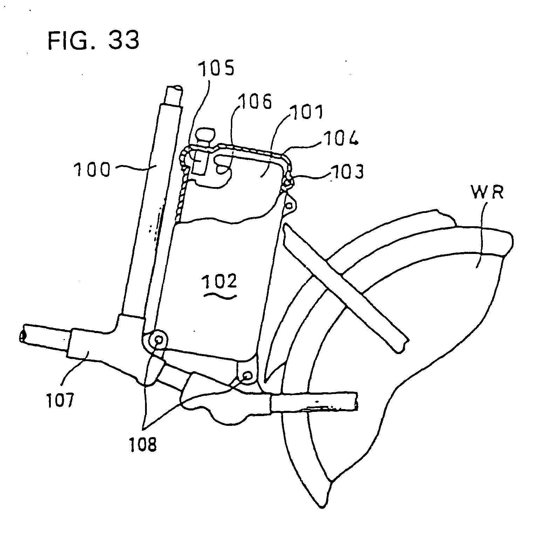

FIG. 33 is a side view showing an essential portion of a motor-assisted bicycle provided with a battery box for containing a battery. In this motor-assisted bicycle, a battery pack 101 subjected to shrink packing is disposed between a seat post 100 and a rear wheel WR. The battery pack 101 is contained in an outer box, that is, a battery box 102, and is covered with a lid 104 openable/closable with a hinge 103 taken as a pivot. The lid 104 is provided with a key 105, and a corner portion, corresponding thereto, of the battery pack 101 is cutout for avoiding interference with the key 105. A recess 106 provided in the battery pack 101 in such a manner as to be continuous to the cutout portion-is taken as a handhold. The battery box 101 is fixed to a frame 107 by using bolts 108 integrated with nuts. The motor-assisted bicycle on which the above battery containing device is mounted has been disclosed in Japanese Patent Laid-open No. Hei 9-95290.

The battery containing device described in the Japanese Patent Laid-open No. Hei 8-142955 has a structure that the inner box is contained in the outer box, the outer box is then covered with a lid, and the lid is key-locked. An upper portion of the inner box, which has been contained in the outer box, is pressed down by the lid thus key-locked, whereby the inner box is fixed not to be moved in the outer box. Accordingly, to press down the heavy battery so as to prevent the battery from being moved in the outer box, the lid is required to have high strength and high rigidity. As a result, there arises a problem in limiting the selection range of materials used for the lid and the degree of freedom in design of the structure of the lid.

In the battery containing device, the battery is inserted or removed in or from the outer box extending in the vertical direction. Accordingly, at the time of inserting or removing the battery in or from the outer box, care must be taken with the battery not to be dropped in the course of movement of the battery to the depth (lower portion) in the outer box.

The battery containing device disclosed in the Japanese Patent Laid-open No. Hei 9-95290, in which the recess is taken as the handhold, has another disadvantage that the handling of the handhold becomes laborious because a user must insert his or her hand in the depth of the battery back to catch the handhold. On the other hand, if the handhold projects upward from the battery pack, there arises another problem that the outer box is enlarged in size and it is not easy to ensure a space for arrangement of the handhold. Also, the battery pack making use of the recess as the handhold or having a fixed handhold makes it difficult to take a good balance in weight, and is worse in workability in mounting or dismounting of the battery back on or from the motor-assisted bicycle or in carrying thereof.

As described in the Japanese Patent Laid-open No. Hei 9-95290, the mounting portion for mounting the battery box 101 to the frame, that is, the fastening portion using the bolts 108 integrated with nuts may be covered with a cover member for protecting the mounting portion and enhancing the appearance of the mounting portion. The provision of a special cover, however, is undesirable because the number of parts is increased, to thereby increase the number of assembling steps. Further, depending on the mounting position, the cover member is excessively enlarged, to rather degrade the appearance of the mounting portion.

It is an object of the present invention to provide a motor-assisted bicycle having a box for containing a battery, which is allowed to be mounted while keeping a good appearance without increasing the number of parts and excessively enlarging the cover member.

This object is achieved by a motor-assisted bicycle having a box for containing a battery according to claim 1.

According to a first feature of the present invention, there is provided a motor-assisted bicycle having a box for containing a battery, which is used for mounting, on a vehicular body, a battery including a battery main body contained in a battery case, the box comprising: a box main body for holding the battery; an upper lid for covering an upper opening of the box main body and mounting portions for connecting the box main body to the vehicular body, the mounting portions comprising holes and being connected to the vehicular body by bolts, wherein said mounting portions extend in the plane of the upper opening of said box main body and wherein said upper lid covers said mounting portions and said bolts.

According to a second feature of the present invention, the box main body is provided with a flange which projects at least rightward and leftward from the upper opening of the box main body so as to engage with upper surfaces of a pair of right and left frame portions constituting part of the vehicular body; and wherein said flange is screwed to said frame portions by means of said bolts.

According to a third feature of the present invention, the box main body is mounted on the frame portions in such a manner that side surfaces of the box main body face to widened portions of the frame portions in a side view, each of the widened portions having a height being nearly equal to a depth of the box main body.

According to a fourth feature of the present invention, the upper lid is supported by hinges provided on one side of the box main body in such a manner as to be openable/closable sideways of the vehicular body; and the hinges are located under an upper edge of the box main body while being offset inward of the frame portions.

With the above-described first through fourth features, not only the box main body but also the mounting portion for connecting the box main body to the vehicular body can be covered with the upper lid. In particular, with the second feature, the bolts for connecting the flange to the vehicular body are covered not to be exposed to the outside.

With the third feature, the side surface of the box is covered with the widened portions of the frame portions for constituting parts of the vehicular body. With the fourth feature, the hinges for connecting the upper lid to the box main body are covered with the frame portions of the vehicular body.

Preferred embodiments of the present invention will be described hereinafter with reference to the accompanying drawings, in which:
FIG. 1 is a side view of a motor-assisted bicycle according to one embodiment of the present invention.
FIG. 2 is a perspective view, seen from left, forward side, showing a rear frame.
FIG. 3 is a plan view of the rear frame.
FIG. 4 is a side view showing an essential portion of an assist unit and its neighborhood.
FIG. 5 is a sectional perspective view showing a structure of a battery.
FIG. 6 is a perspective view of a battery box.
FIG. 7 is a sectional side view of the battery box.
FIG. 8 is a sectional view taken on line A-A of FIG. 7.
FIG. 9 is an enlarged view of an essential portion of the battery box.
FIG. 10 is a perspective view of a front portion of a main body of a battery box according to a variation of the present invention.
FIG. 11 is a perspective view of a rear portion of the main body of the battery box according to the variation.
FIG. 12 is a perspective view of an upper lid of the battery box according to the variation.
FIG. 13 is a sectional view of an essential portion of the battery box according to the variation.
FIG. 14 is a plan view of the rear frame.
FIG. 15 is a sectional perspective view showing a structure of a battery.
FIG. 16 is a perspective view of a left case.
FIG. 17 is a perspective view of a right case.
FIG. 18 is a perspective view of the left case, showing a state in which the handhold is tilted.
FIG. 19 is a front view of an essential portion of the right case, showing a handhold supporting portion.
FIG. 20 is a sectional view of the case, showing the handhold supporting portion from the inside of the case (in the state in which the handhold is raised).
FIG. 21 is a sectional view of the case, showing the handhold supporting portion from the inside of the case (in the state in which the handhold is contained).
FIG. 22 is a sectional side view of a battery box (in the state in which the lid is closed).
FIG. 23 is a sectional side view of a battery box (in the state in which the lid is opened).
FIG. 24 is a perspective view, seen from left, rear side, showing a rear frame.
FIG. 25 is a plan view of the rear frame.
FIG. 26 is a perspective view of an external appearance of a battery box.
FIG. 27 is a perspective view of the battery box showing a state in which a lid is opened.
FIG. 28 is a sectional view taken on line A-A of FIG. 4.
FIG. 29 is a sectional view showing an essential portion of a left member of a rear frame of the vehicular body.
FIG. 30 is a perspective view, seen from the left, front side of the vehicular body, showing a box main body of the battery box.
FIG. 31 is a perspective view, seen from the right, front side of the vehicular body, showing the lid of the battery box.
FIG. 32 is a sectional view showing an essential portion of the battery box.
FIG. 33 is a side view showing an essential portion of a prior art motor-assisted bicycle provided with a battery box for containing a battery.

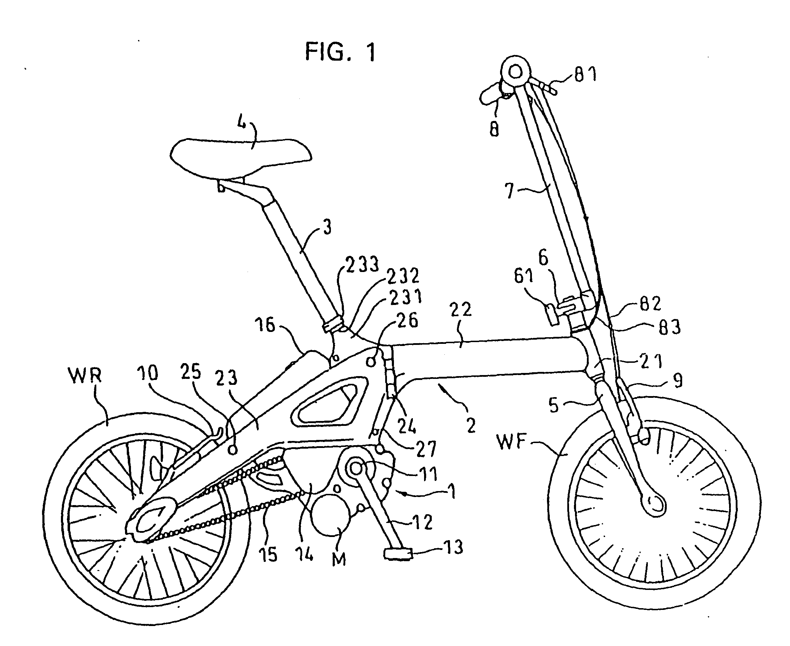

Hereinafter, first embodiment of the present invention will be described with reference to the FIGS. 1 through 13. FIG. 1 is a side view of a motor-assisted bicycle according to one embodiment of the present invention. A body frame 2 of the motor-assisted bicycle includes a head pipe 21 positioned on the front side of a vehicular body, a pipe-shaped front frame 22 extending rearwardly from the head pipe 21 substantially in the horizontal direction, and a rear frame 23 connected to a rear end of the front frame 22. The rear frame 23 is a divided type frame composed of a pair of right and left aluminum die-cast products. The divided type frame has a branched structure having, at a position near the front side of the vehicular body, a connecting portion 231. The connecting portion 231 has a boss 232 for holding a seat post 3 which extends obliquely rearwardly, upwardly therefrom. The boss 232 has an interference to be fitted to the seat post 3. By inserting the seat post 3 in the boss 232 and fastening a clamper 233 provided around the boss 232, the seat.post 3 is positively held by the boss 232. when the clamper 233 is loosened, the seat post 3 is vertically slidable relative to the boss 233, whereby the height of a seat 4 mounted on an upper end of the seat post 3 can be adjusted.

A shaft portion formed on an upper portion of a front fork 5 is turnably supported by the head pipe 21. A handle post 7 is connected to an upper end of the shaft portion of the front fork 5 via a joint 6. A steering handlebar 8 is connected to an upper portion of the handle post 7. The joint 6 can be loosened by operating a knob 61, to thereby fold the handle post 7 centered at the joint 6. A front wheel WF is rotatably supported by front ends of the front fork 5. A leading end of a wire 82 extending downwardly from a brake lever 81 provided on the steering handlebar 8 is connected to a front brake 9 provided on the front wheel WF.

The rear frame 23 is joined to the front frame 22 by means of a hinge 24 and a lock unit which is provided on the opposed side to the hinge 24, that is, on the left side of the vehicular body. By releasing the locking state of the lock unit, the vehicular body can be folded with the hinge 24 taken as a pivot, and by releasing the joining state of the hinge 24, the front frame 22 and the rear frame 23 can be separated from each other.

An appearance of the rear frame 23 in a side view has a triangular shape with the width (height in the figure) being large at a front portion and becoming narrow toward the rear side. A rear wheel WR is rotatably supported between rear ends of the pair of right and left divided portions of the rear frame 23. A rear brake 10 is provided on the rear frame 23, and a wire 83 extending from the steering handlebar 8 is connected to the rear brake 10.

A motor-assist unit (which is sometimes simply called "assist unit") 1 is suspended from the widened portion, that is, the front portion of the rear frame 23 at a position offset rearwardly from the extension line of the seat post 3. At the time of assembling the right and left divided portions of the rear frame 23 with fastening bolts 25 and 27, the motor-assist unit 1 is fixedly co-fastened to the divided portions of the rear frame 23 with the bolts 25 and 27. The motor-assist unit 1 has at its lowermost portion an electric motor M for assisting a leg-power, and a crankshaft 11 disposed over and in front of the motor M. Cranks 12 are fixed to right and left ends of the crankshaft 11. A pedal 13 is provided on a leading end of each crank 12. The pedal 13 shown in the figure is configured to be used in a state extending in the width direction of the vehicular body; however, the pedal 13 may be configured by providing a hinge at a connecting portion between the pedal 13 and the crank 12 thereby making the pedal 13 foldable along the crank 12 when the pedal 13 is in the disuse state.

A leg-power inputted from the pedals 13 and an assist force which is generated by the motor M for assisting the leg-power are combined with each other via a transmission containing gears contained in the motor-assist unit 1, and the resultant power is outputted to rotate a drive sprocket (not shown) covered with a sprocket cover 14. The rotation of the drive sprocket is transmitted to the rear wheel WR via a chain 15. In addition, the diameter of each of the front wheel WF and the rear wheel WR is set to 16 inches.

A battery box 16 for containing a battery as a power source for the motor M and other electric equipment is mounted in a space surrounded by the widened portion of the rear frame 23, the connecting portion 231 of the rear frame 23, and the bolt 25 (or a boss for supporting the bolt 25) for connecting the rear portions of the pair of right and left divided portions of the rear frame 23. In addition, to connect the right and left divided portions of the rear frame 23 to each other, a bolt 26 disposed in the vicinity of the connecting portion to the front frame 22 is used in addition to the above-described bolts 25 and 27.

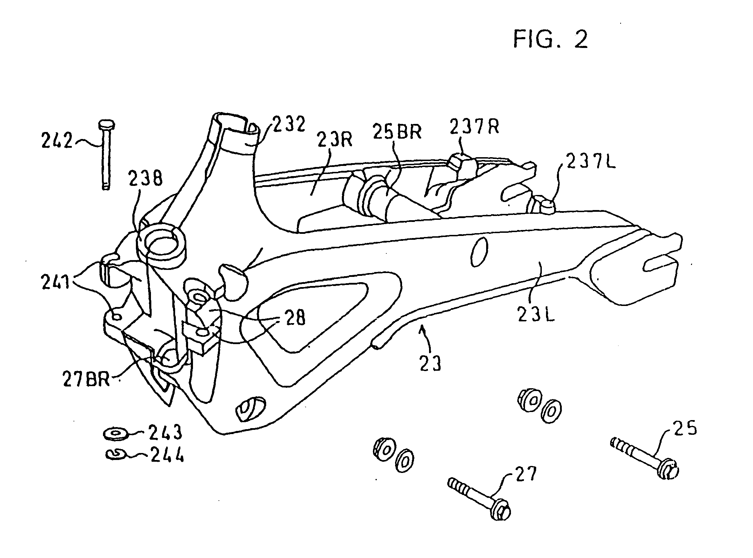

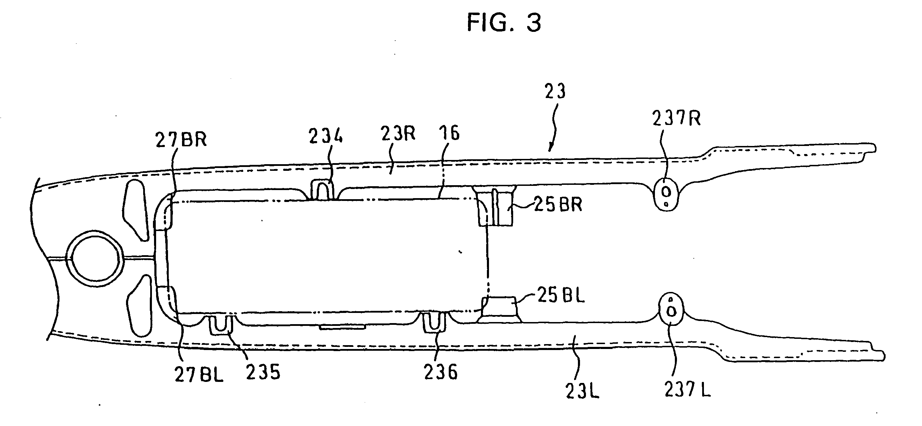

FIG. 2 is a perspective view, seen from the left front side of the vehicular body, showing the rear frame 23, and FIG. 3 is a plan view of the rear frame 23. As shown in these figures, the rear frame 23 is composed of a left portion 23L and a right portion 23R. The left portion 23L has bosses 25BL and 27BL in which the bolts 25 and 27 are insertable, and the right portion 23R has bosses 25BR and 27BR in which the bolts 25 and 27 are insertable. Each of the left and right portions 23L and 23R is also provided with a boss in which the bolt 26 is insertable; however, such a boss is not shown in FIGS. 2 and 3. Two hanger portions (which will be described later) formed on an upper end of the motor-assist unit 1 are held between the bosses 25BL and 25BR and between the bosses 27BL and 27BR.

Seats 234, 235 and 236 for mounting the battery box 16, and seats 237L and 237R for mounting the rear brake 10 are formed on the upper surface of the rear frame 23. A mounting seat 238 for mounting a power supply switch adapted to supply a current from the battery to the motor-assist unit 1 and the like is formed on the upper surface of the rear frame 23 at a position in front of the boss 232 for the seat post.

A boss 241 as one portion of the hinge 24 and a boss 28 for turnably supporting a pin (not shown) of the lock unit are formed at a front end of the rear frame 23, that is, on a front surface, to be mated to the front frame 22, of the rear frame 23. A pivot pin 242 is inserted in the boss 241, and a washer 243 and a snap ring 244 are mounted to a leading end of the pivot pin 242. A hook (which will be described later) on the front frame 22 side, which constitutes part of the hinge, is engaged with the pin 242.

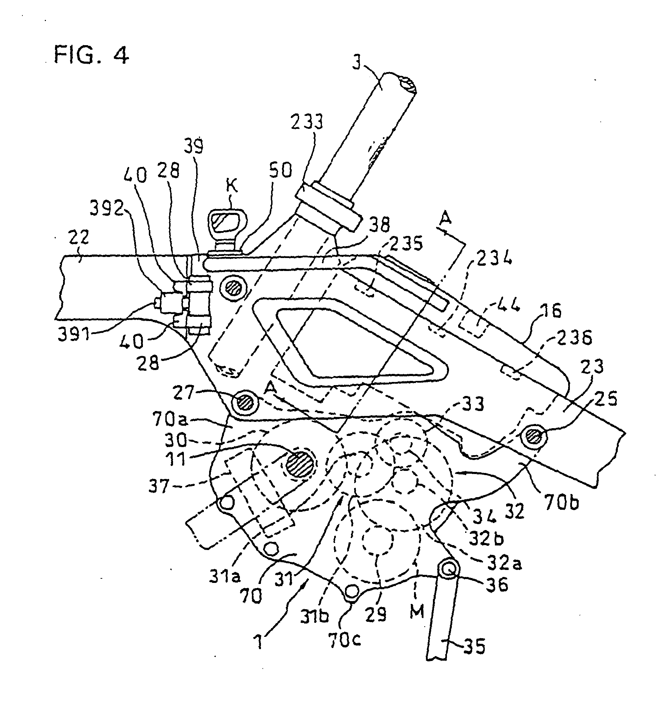

FIG. 4 is a side view of an essential portion of the motor-assist unit 1, illustrating a relationship among mounting positions of the rear frame 23, the battery box 16, and the motor-assist unit 1. Referring to FIG. 4, hangers 70a and 70b for connecting the motor-assist unit 1 to the rear frame 23 are formed around a case main body 70 of the motor-assist unit 1. The motor-assist unit 1 is suspended by the rear frame 23 by fastening the hangers 70a and 70b to the rear frame 23 with the bolts 25 and 27. The case main body 70 of the motor-assist unit 1 may be desirable to be formed of a resin molded product for reducing the weight thereof.

A leg-power input gear 30 is connected to the crankshaft 1 via a one-way clutch (not shown). The leg-power input gear 30 is meshed with a small gear 31a of a composite gear 31. On the other hand, a large gear 32a of an assist power gear (simply called assist gear) 32 is meshed with a pinion 29 of the motor M. A small gear 32b rotating together with the large gear 32a is meshed with a large gear 31b of the composite gear 31. The large gear 31b of the composite gear 31 is meshed with an output gear 34 fixed to a shaft of a drive sprocket 33. The assist gear 32 may be desirable to be formed of a resin molded product for reducing the weight thereof, and to be configured as a helical gear from the viewpoint of silence and the like.

In this way, the rotation of the motor M is transmitted to the composite gear 31 via the pinion 29 and the assist gear 32, and the leg-power inputted from the crankshaft 11 is transmitted to the composite gear 31 via the leg-power input gear. The leg-power and the assist power are combined with each other at the composite gear 31, and the resultant power is transmitted to the drive sprocket 33. A controller 37 disposed in a front portion of the case 70 controls the rotation of the motor M on the basis of a value of leg-power inputted from leg-power detecting means (not shown).

A pivot 36 for turnably supporting a main stand 35 is mounted to a lower portion of the rear side of the main body case 70. The pivot 36 is formed of an aluminum molded product. A projection 70c provided at a lower end of the main body case 70 is a foot portion for allowing self-standing of a rear portion of the bicycle containing the rear frame 23 when the front frame 22 and the rear frame 23 are separated from each other. When the rear portion of the bicycle is placed on the ground, it can self-stand with the projection 70c and the rear wheel WR.

A lock pin 39 having a lock lever 38 is inserted in the two bosses 28 provided at the front end of the rear frame 23. A bolt 391 is provided in such a manner as to be turnable around the lock pin 39, and a nut 392 is screwed with the bolt 391. The bolt 391 is made to pass through a groove of an engagement portion 40 projecting from the front frame 22, and one plane of the nut 392 is brought into contact with the engagement portion 40, to form a fastening plane.

A central portion, to which the bolt 391 is mounted, of the lock pin 39 has an eccentric shape being offset from a hole of the boss 28, so that the contact strength between the fastening plane of the nut 392 and the engagement portion 40 can be increased or decreased by turning the lock lever 38. The maximum value of the contact strength between the fastening plane of the nut 392 and the engagement portion 40 can be determined on the basis of the turning amount of the nut 392.

As shown in the figure, in the state in which the lock lever 38 is turned to a position along the rear frame 23, the nut 392 is forcibly brought into contact with the engagement portion 40 to forcibly connect the front frame 22 to the rear frame 23. On the other hand, when the lock lever 38 is turned in the direction where it is separated from the rear frame 23, that is, in the direction perpendicular to the vehicular body, since the lock pin 39 has an eccentric shape, the nut 392 is offset in the direction where it is separated from the engagement portion 40 (that is, toward the front portion of the vehicular body) by a distance corresponding to the eccentric amount of the lock pin 39, to weak the contact strength between the nut 392 and the engagement portion 40. By turning the bolt 391 around the lock pin 39 in the state in which the contact strength is weakened, the engagement between the nut 392 and the engagement portion 40 can be released, whereby the front frame 22 and the rear frame 23 can be folded around the hinge 24.

A power supply switch 50 operable with a key K is mounted to the mounting seat 238 (see FIG. 2) which is provided on the front portion of the rear frame 23, that is, on the front side of the boss 232 for holding the seat post.

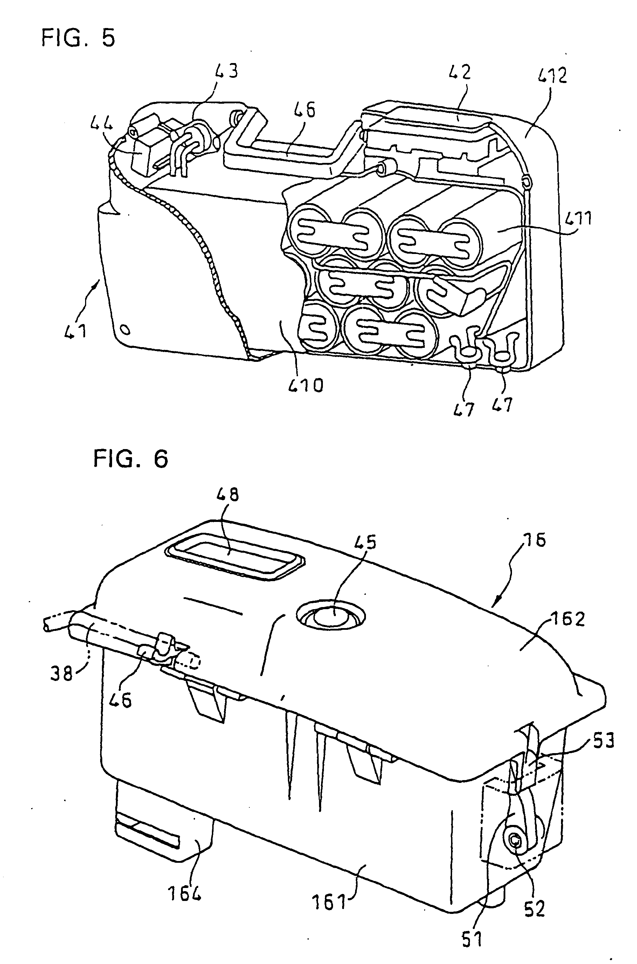

FIG. 5 is a perspective view, with an essential portion cutaway, showing a structure of the battery. As shown in the figure, a battery 41 includes a battery main body 411 (composed of a stack of 20 pieces of nickel-hydrogen cells) wrapped with a package 410 formed of a shrink film, and a two-divided case 412 for containing the battery main body 411. The case 412 is formed of a resin molded product. The case. 412 is provided with an indicator 42 which turns on one or more of a plurality of LEDs and indicating the remaining capacity of the battery with the number of the turned-on LEDs; a connector 43 for charging; and a fuse 44. A handhold 46 for carrying or mounting/dismounting the battery 41 is turnably mounted to the case 412. Two terminals 47 connected to the battery main body 411 are provided on a bottom of the case 412.

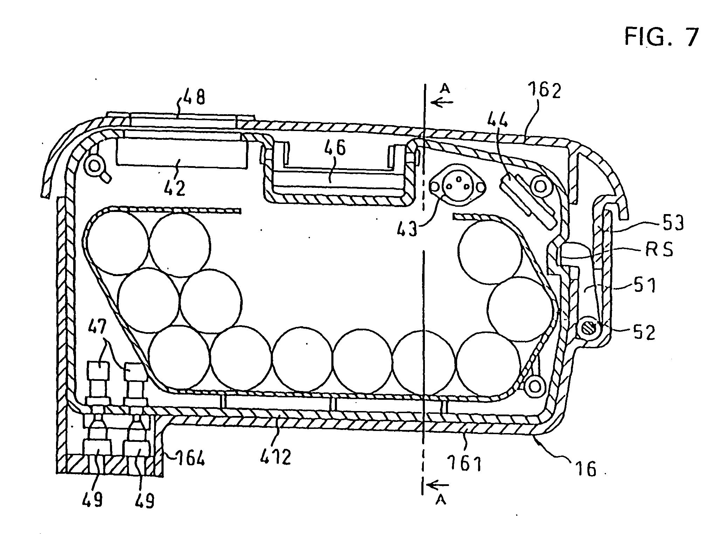

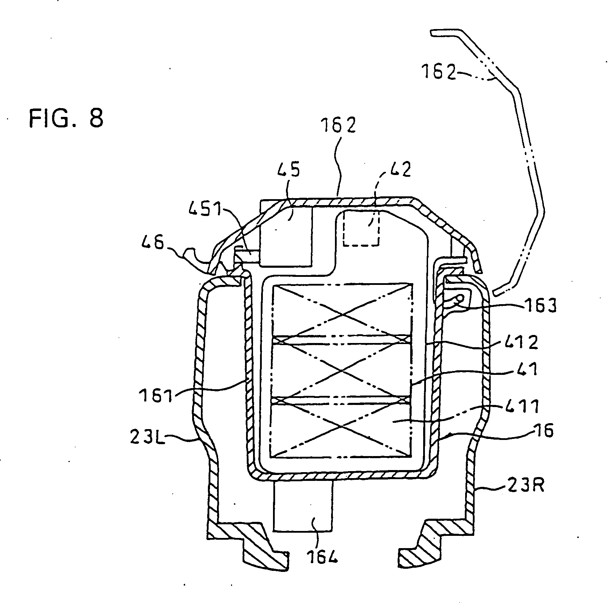

FIG. 6 is a perspective view of an appearance of the battery box 16; FIG. 7 is a sectional side view of the battery box 16; and FIG. 8 is a sectional view taken on line A-A of FIG. 7. Referring to these figures, the battery box 16 is supported on the seats 234, 235 and 236 with its longitudinal direction extending along the longitudinal direction of the vehicular body, and is placed between the left portion 23L and the right portion 23R of the rear frame 23. The battery box 16 includes a box main body 161 having an upper portion opened for allowing the battery 41 to be mounted/dismounted, from above, in/from the battery box 16, and a lid 162 for covering the opened upper portion. The lid 162 is turnably mounted to the box main body 161 by using a hinge 163 in order to be turned and opened sideways of the vehicular body. The state in which the lid 162 is opened is shown by a two-dot chain line in FIG. 8. In this embodiment, since the box main body 161 is disposed with its longitudinal direction extending along the longitudinal direction of the vehicular body, the opening of the upper portion of the box main body 161 becomes wide as compared with the case where the box main body is disposed with its longitudinal direction extending substantially in the vertical direction, with a result that the operation of mounting/dismounting the battery 41 can be facilitated.

The lid 162 has a window 48 through which a driver can observe the indicator 42, and a key unit 45. The key unit 45 has a claw 451 allowed to be moved in or out of a hole provided in an upper end of the box main body 161 by turning a key (which may be common to a key for operating the power supply switch). By engaging the claw 451 with the hole of the upper end of the box main body 161, the lid 162 is locked with the box main body 161.

The battery 41 is contained in the box main body 161, and a terminal box 164 is formed on a bottom of the box main body 161. The terminal box 164 contains two terminals 49 connected to two terminals 47 on the battery 41 side. The terminals 49 are connected to the controller 37 via a cable (not shown). An U-shaped member 46 is provided on an upper portion of the box main body 161 in such a manner as to project sideways from a cutout formed in an edge portion of the lid 162. The U-shaped member 46 is used as a receiving member for holding the lock lever 38 at a position along the rear frame 23.

A lock arm 51 for holding the battery 41 in the battery box 16 is provided in the box main body 161. The lock arm 51 is pivotably supported by the box main body 161 by using a pin 52 so as to be tiltable in the longitudinal direction of the vehicular body. The box main body 161 has a double structure at a portion in which the lock arm 51 is provided, and the lock arm 51 is contained in the double wall. The lock arm 51 extends upwardly from the pin 52, with its leading end facing to the inner side of the box main body 161 through an inner wall of the double wall portion. The position and shape of the locker arm 51 are set such that the leading end thereof is inserted in a recess RS of the case 412 of the battery 41.

A suspended piece 53 is mounted or integrally formed on an edge, on the rear side of the vehicular body, of the lid 162. The position and shape of the suspended piece 53 are set such that in the state in which the lid 162 is closed, the suspended piece 53 is inserted between the back surface (surface on the rear side of the vehicular body) of the lock arm 51 and the outer wall of the double wall portion of the box main body 161, and in the state in which the lid 162 is opened, the removal of the suspended piece 53 forms a space in which the locker arm 51 is tiltable toward the outer wall of the double wall portion of the box main body 161.

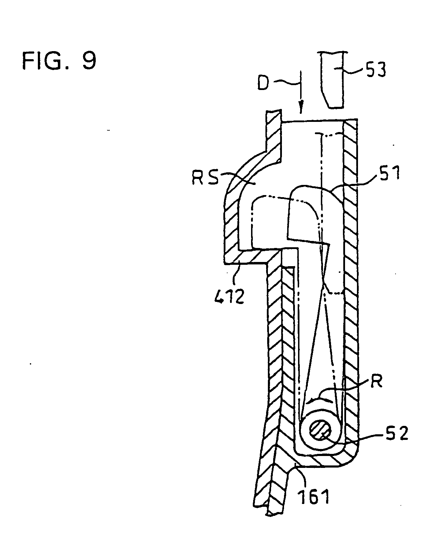

The operations of holding the battery 41 and releasing the holding of the battery 41 by the lid 162 and the lock arm 51 will be described with reference to FIG. 9. FIG. 9 is an enlarged view of an essential portion shown in FIG. 7. Referring to FIG. 9, the locker arm 51 is turnable in the direction shown by arrow R. In the state in which the lid 162 is opened, since the suspended piece 53 of the lid 162 is escaped upwardly, the locker arm 51 is tiltable in the direction where it is separated from the recess RS. Accordingly, when the battery 41 is pulled up by a driver who grips the handhold 46, the locker arm 51 is retreated, so that the leading end of the locker arm 51 is escaped from the recess RS, to release the locking state, whereby the battery 41 can be removed from the battery box 16.

The battery 41 is mounted in the battery box 16 by inserting the battery 41, from above, into the box main body 161. In this case, if the locker arm 51 is retreated, the case 412 can be moved down without interference with the locker arm 51, so that the battery 41 can be contained at a specific position. On the other hand, if the locker arm 51 is tilted toward the inner side of the battery box 16, since a tilt portion at a lower end of the case 412 is brought into contact with the leading end of the locker arm 51,the locker arm 51 is pushed out toward the rear side of the vehicular body. Accordingly, even in this case, the battery 41 can be easily contained in the box main body 161 without any problem. When the battery 41 is contained in the box main body 161, the terminals 47 are connected to the terminals 49.

By closing the lid 162, the suspended piece 53 is moved down in the direction shown by arrow D. In this case, the back surface of the locker arm 51 is pushed toward the recess RS side by means of the suspended piece 53, so that the leading end of the locker arm 51 is tilted toward the front side of the vehicular body (shown by a two-dot chain line). At the position where the lid 162 is closed, since the leading end of the locker arm 51 is fitted in the recess RS, the battery 41 is firmly held in the battery box 16 closed with the lid 162. By locking the lid 162 with the key unit 45 after the lid 162 is closed, the lid 162 becomes unopenable, thereby attaining a burglar preventive function of the bicycle and a function of holding the battery 41 during running.

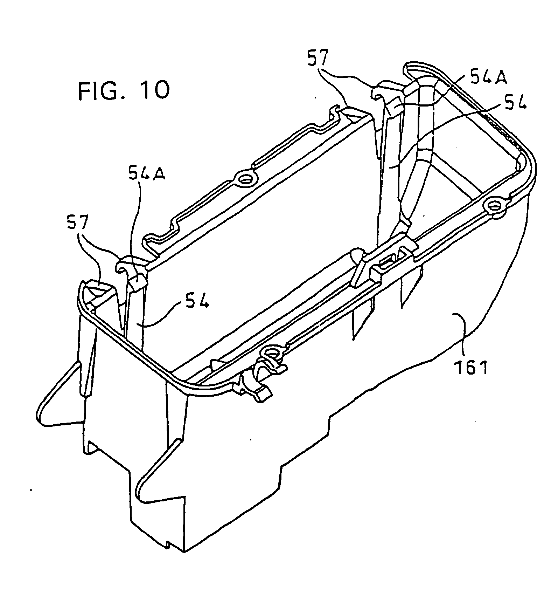

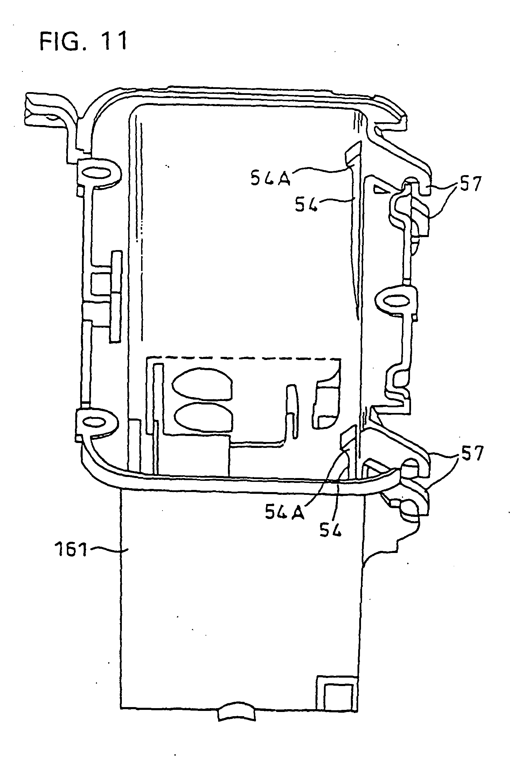

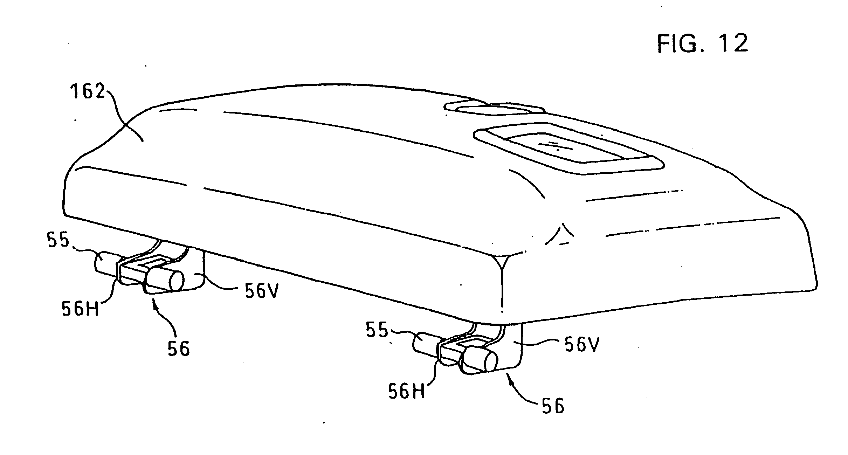

A variation of a battery box will be described below. FIG. 10 is a perspective view, seen from the forward, left side of the vehicular body, showing a box main body of a battery box according to the variation; FIG. 11 is a perspective view, seen from the back side, showing the box main body shown in FIG. 10; and FIG. 12 is a perspective view, seen from the forward, right side, showing a lid of the battery box. According to this variation, a battery box 41 is held in a battery box 16 in a state in which a locking member (equivalent to the locker arm 51) is engaged with a side surface of the battery 41, which surface is positioned on a side of the vehicular body in a posture contained in the battery box 15. Referring to FIGS. 10 to 12, two arms 54 extending in the height direction of the box main body 161 are provided on an inner surface of the box main body 161 in the longitudinal direction. To be more specific, the arms 54 are located at both end portions in the longitudinal direction of the box main body 161.

The arm 54 is held in such a cantilever manner that a lower end thereof is held on a bottom of the box main body 161, and an upper end thereof is taken as a free end flexible inwardly or outwardly of the box main body 161 within its elastic limit. The arm 54 may be formed integrally with the box main body 161, or may be formed as a member which is separated from the box main body 161 and is joined thereto by using a screw or adhesive.

Like the lid shown in FIGS. 6 and 8, the lid 162 shown in FIG. 12 is openable/closable sideways of the vehicular body, and has pins 55 acting as turning centers around which the lid 162 is openable/closable. The pins 55 are provided at two positions separated from each other in the longitudinal direction, and are connected to the lid 162 via brackets 56 as connecting members. The bracket 56 is an L-shaped member composed of a vertical portion 56V extending downwardly from the lid 162 and a horizontal portion 56H extending in the horizontal direction from the vertical portion 56V. The pins 55 project from leasing ends of the horizontal portions 56H of the brackets 56 to both sides in the longitudinal direction (longitudinal direction of the vehicular body) of the lid 162. The bracket 56 is positioned such that the vertical portion 56V thereof faces to the arm 54.

The box main body 161 has two bearings 57 in which the pins 55 of the lid 162 are fitted. Each of the two bearings 57 has a pair of bearing portions for rotatably supporting both ends of each pin 55. The bearing portion has an upper jaw and a lower jaw for supporting, from above and below, the pin 55, respectively.

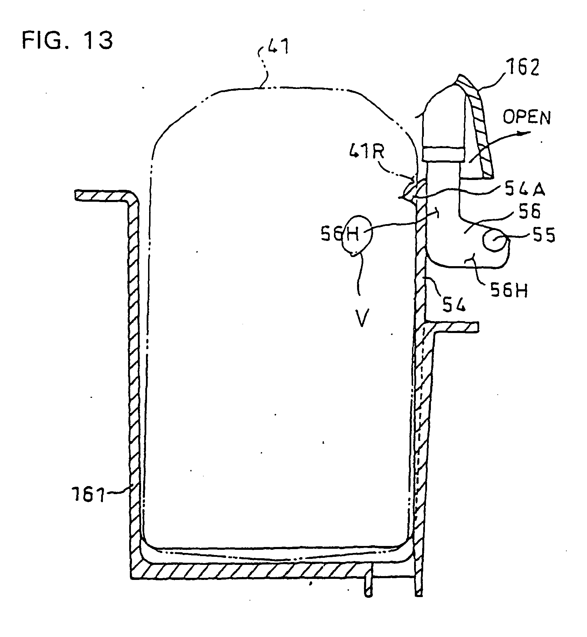

FIG. 13 is a sectional view showing an essential portion of the battery box. Referring to this figure, in a state in which the battery 41 is contained in the battery box 16, each arm 54 is pushed from its free position to the outer side of the battery box 16 by the battery 41, to be engaged in a recess 41R of the battery; and in a state in which the lid.162 is closed, the vertical portion 56V of each bracket 56 is pushed to the back surface of the arm 54, whereby the arm 54 is prevented from being moved outside the box main body 161 from the battery locking position. Accordingly, in the state in which the lid 162 is closed, the battery 41 is fixed not to be moved in the box main body 161, to thus keep its lock state.

On the other hand, when the lid 162 is turned in the direction shown by arrow "OPEN" to be thus opened, the vertical portion 56V of the bracket 56 is separated from the back surface of the arm 54. Accordingly, by pulling up the battery 41, the arm 54 is moved outside the battery box 16 due to the elasticity of the arm 54, so that the engagement of a claw 54A with the recess 41R is released. In this way, the locking is released in the state in which the lid 162 is opened, whereby the battery 41 can be inserted in or removed from the box main body 161.

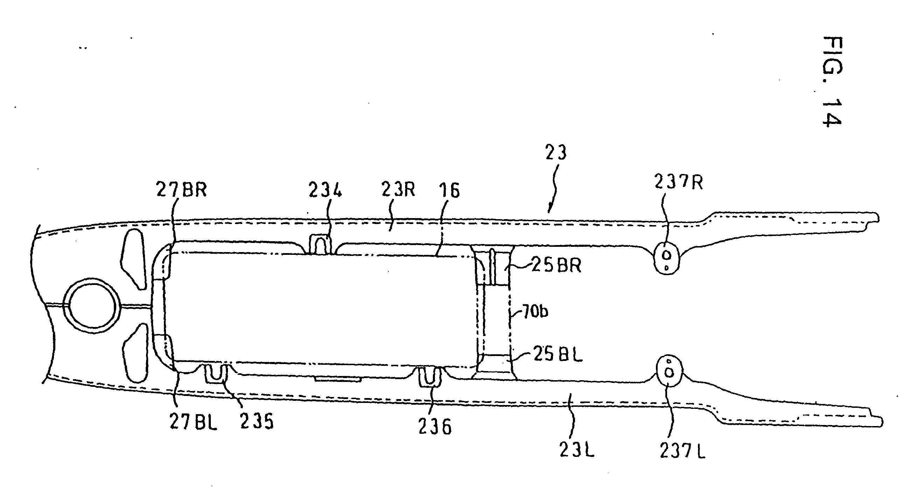

Hereinafter, the second embodiment of the present invention will be described with reference to FIGS. 14 through 23. As the explanation relating to the motor-assisted bicycle shown in FIG. 1 is same as that of the first embodiment, the explanation will be omitted.

FIG. 2 is a perspective view, seen from the left front side of the vehicular body, showing the rear frame 23, and FIG. 14 is a plan view of the rear frame 23. As shown in these figures, the rear frame 23 is composed of a left portion 23L and a right portion 23R. The left portion 23L has bosses 25BL and 27BL in which the bolts 25 and 27 are insertable, and the right portion 23R has bosses 25BR and 27BR in which the bolts 25 and 27 are insertable. While not shown in FIGS. 2 and 14, each of the left and right portions 23L and 23R is also provided with a boss in which the bolt 26 is insertable. The hanger portions 70 and 70b (also see FIG. 4) formed on an upper end of the assist unit 1 are held between the bosses 25BL and 25BR and between the bosses 27BL and 27BR.

Seats 234, 235 and 236 for mounting the battery box 16, and seats 237L and 237R for mounting the rear brake 10 are formed on the upper surface of the rear frame 23. A mounting seat 238 for mounting a power supply switch adapted to supply a current from the battery to the assist unit 1 and the like is formed on the upper surface of the rear frame 23 at a position in front of the boss 232 for the seat post.

Bosses 241 constituting part of the hinge 24 and bosses 28 for turnably supporting a pin (not shown) of the lock unit are formed on a front end of the rear frame 23, that is, a mating plane of the rear frame 23 to the front frame 22. A pivot pin 242 is inserted in the bosses 241, and a washer 243 and a snap ring 244 are mounted to a leading end of the pivot pin 242. A hook (to be described later) on the front frame 22 side constituting part of the hinge is engaged with the pin 242.

FIG. 4 is a side view of an essential portion of the assist unit 1, illustrating a relationship among mounting positions of the rear frame 23, the battery box 16, and the motor-assist unit 1. Referring to FIG. 4, hangers 70a and 70b for connecting the motor-assist unit 1 to the rear frame 23 are formed on the peripheral portion of a case main body 70 of the assist unit 1. The assist unit 1 is suspended from the rear frame 23 by fastening the hangers 70a and 70b to the rear frame 23 with the bolts 25 and 27.

A leg-power input gear 30 is connected to the crankshaft 1 via a one-way clutch (not shown). The leg-power input gear 30 is meshed with a small gear 31a of a composite gear 31. On the other hand, a large gear 32a of an assist power gear (which is hereinafter referred to simply as "assist gear") 32 is meshed with a pinion 29 of the motor M. A small gear 32b rotating together with the large gear 32a is meshed with a large gear 3ib of the composite gear 31. The large gear 31b of the composite gear 31 is meshed with an output gear 34 fixed to a shaft of a drive sprocket 33. The case main body 70 of the assist unit 1 and the assist gear 32 may be each desirable to be formed of a resin molded product for reducing the weight thereof. The assist gear 32 may be configured as a helical gear from the viewpoint of silence and the like.

In this way, the rotation of the motor M is transmitted to the composite gear 31 via the pinion 29 and the assist gear 32, and the leg-power inputted from the crankshaft 11 is transmitted to the composite gear 31 via the leg-power input gear. The leg-power and the assist power are combined with each other at the composite gear 31, and the resultant power is transmitted to the drive sprocket 33 and is further transmitted to the rear wheel WR via the chain 15. A controller 37 disposed in a front portion of the case 70 controls the rotation of the motor M on the basis of a value of leg-power inputted from leg-power detecting means (not shown).

A pivot 36 for turnably supporting a main stand 35 is mounted to a lower portion of the rear side of the main body case 70. The pivot 36 is formed of an aluminum molded product. A projection 70c provided at a lower end of the main body case 70 is a foot portion for allowing self-standing of a rear portion of the bicycle containing the rear frame 23 when the front frame 22 and the rear frame 23 are separated from each other. When the rear portion of the bicycle is placed on the ground, it can self-stand by means of the projection 70c and the rear wheel WR.

A lock pin 39 having a lock lever 38 is inserted in two bosses 28 provided at the front end of the rear frame 23. A bolt 391 is provided in such a manner as to be turnable around the lock pin 39, and a nut 392 is screwed with the bolt 391. The bolt 391 is made to pass through a groove of an engagement portion 40 projecting from the front frame 22, and one plane of the nut 392 is brought into contact with the engagement portion 40, to form a fastening plane.

A central portion, to which the bolt 391 is mounted, of the lock pin 39 has an eccentric shape being offset from a common hole of the bosses 28, so that the contact strength between the fastening plane of the nut 392 and the engagement portion 40 can be increased or decreased by turning the lock lever 38. The maximum value of the contact strength between the fastening plane of the nut 392 and the engagement portion 40 can be determined on the basis of the turning amount of the nut 392. In the state in which the lock lever 38 is turned to a position along the rear frame 23 as shown in the figure, the nut 392 is forcibly brought into contact with the engagement portion 40 to forcibly connect the front frame 22 to the rear frame 23.

On the other hand, when the lock lever 38 is turned in the direction where it is separated from the rear frame 23, that is, in the direction perpendicular to the vehicular body, since the lock pin 39 has the eccentric shape, the nut 392 is offset in the direction where it is separated from the engagement portion 40 (that is, toward the front portion of the vehicular body) by a distance corresponding to the eccentric amount of the lock pin 39, to weak the contact strength between the nut 392 and the engagement portion 40. By turning the bolt 391 around the lock pin 39 in the state in which the contact strength is weakened, the engagement between the nut 392 and the engagement portion 40 can be released, whereby the front frame 22 and the rear frame 23 can be folded around the hinge 24.

A power supply switch 50 operable with a key K is mounted to the mounting seat 238 (see FIG. 12) which is provided on the front portion of the rear frame 23, that is, on the front side of the boss 232 for holding the seat post.

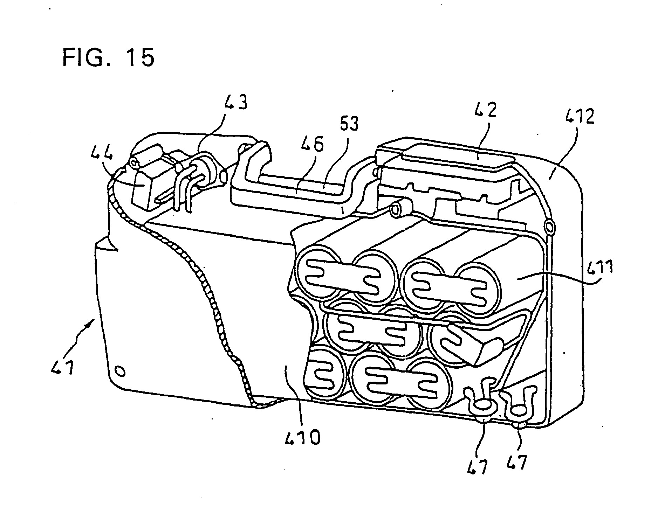

FIG. 15 is a perspective view, with an essential portion cutaway, showing a structure of the battery. As shown in the figure, a battery 41 includes a battery main body 411 (for example, composed of a stack of 20 pieces of nickel-hydrogen cells) wrapped with a package 410 formed of a shrink film, and a two-divided battery case (which is hereinafter referred to simply as "case") 412 for containing the battery main body 411. The case 412 is formed of a resin molded product. The case 412 is provided with an indicator 42 which turns on one or more of a plurality of LEDs and indicating the remaining capacity of the battery with the number of the turned-on LEDs; a connector 43 for charging the battery; and a fuse 44. A handhold 46 for carrying or mounting/dismounting the battery 41 is turnably mounted to the case 412. Two terminals 47 connected to the battery main body 411 are provided on a bottom of the case 412.

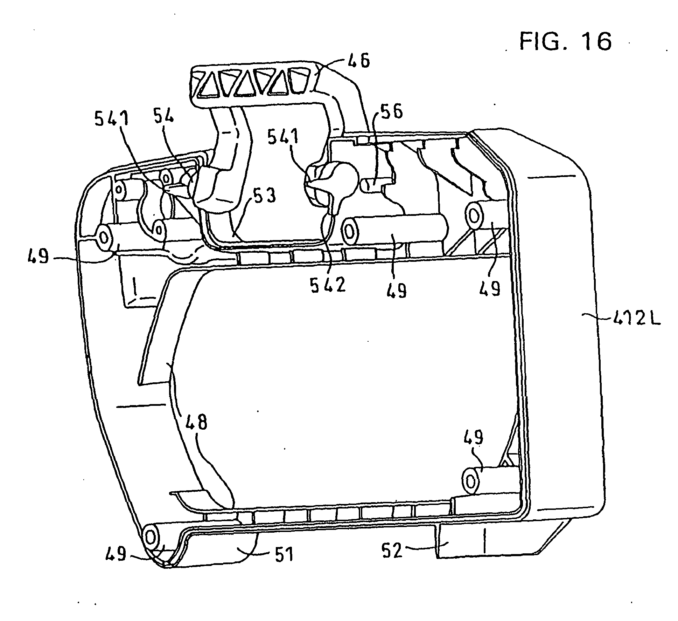

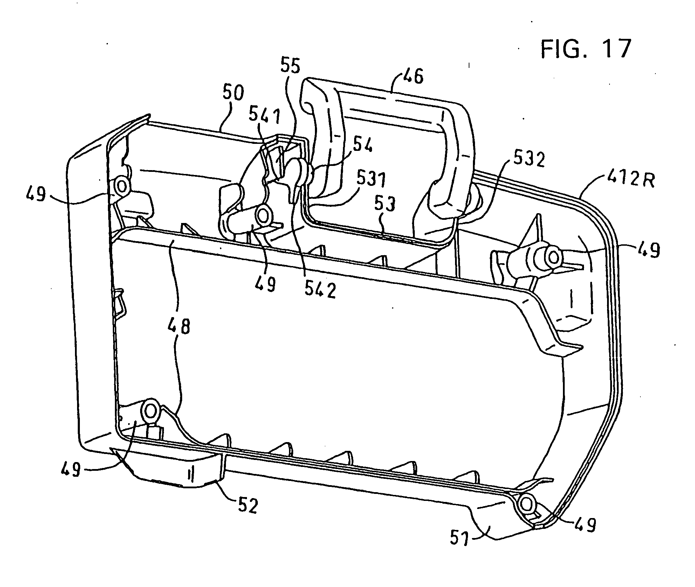

The structure of the case 412 will be described in detail below. FIG. 16 is a perspective view of one of two-divided portions of the case 412, and FIG. 17 is a perspective view of the other one of the two-divided portions of the case 412. The one portion of the case 412 (hereinafter, referred to as "right case") 412R and the other portion of the case 412 (hereinafter, referred to as "left case") 412L are provided with ribs 48 for positioning the battery main body 411 and reinforcing the case 412, and bosses 49 for supporting bolts for integrally connecting the right case 412R and the left case 412L to each other. A window 50, through which a indicating surface of the indicator 42 is viewable from external, is formed in an upper portion of the right case 412R. Legs 51 and 52 are formed on bottom portions of the right case 412R and the left case 412L. The leg 52 has another function of protecting the discharge terminals 47.

A recess 53 is formed in upper central portions of the right case 412R and the left case 412L. Two pivots 54 for turnably supporting the handhold 46 pass through vertical walls 531 and 532 of the recess 53. Each pivot 54 includes a first projecting portion 541 constituting turning range limiting means of the handhold 46, and a second projecting portion 542 for stabilizing the position of the handhold 46 at the time of containing the handhold 46. Stopper walls 55 with which the first projecting portions 541 are brought into contact are formed on the right case 412R, and projections 56 with which the second projecting portions 542 are engaged are formed on the left case 412L.

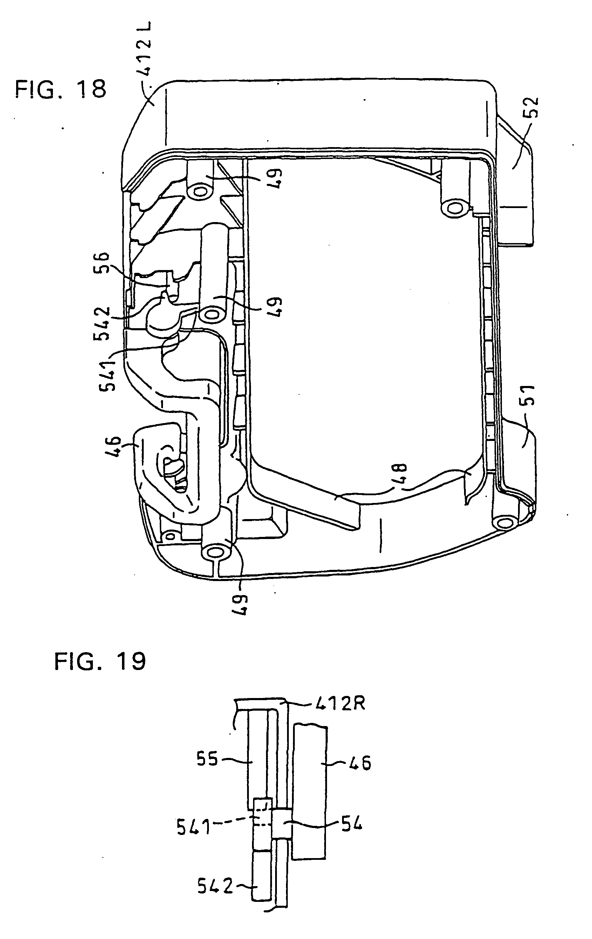

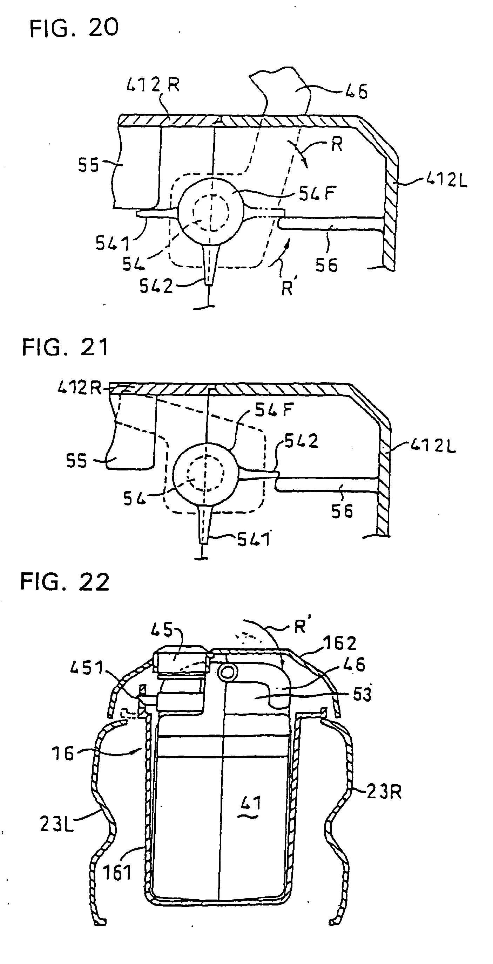

A structure for supporting the handhold 46 will be described in detail below. FIG. 19 is an enlarged view of an essential portion of the case 412 containing a handhold supporting portion; and FIGS. 20 and 21 are enlarged views, seen from the axial direction of the pivots 54, of an essential portion of the case 412. As shown in FIGS. 19 and 20, a flange portion 54F is formed at an end portion of the pivot 54 for supporting the handhold 46 to the case 412, and the first projecting portion 541 and the second projecting portion 542 project radially from the flange portion 54F. When the handhold 46 is raised, the first projecting portions 541 are brought into contact with end surfaces of the stopper walls 55; to thereby limit any further turning motion of the handhold 46 in the R direction.

In the case of containing the handhold 46 in the recess 53 of the case 412, as shown in FIG. 21, the handhold 46 is turned until the second projecting portions 542 are brought into contact with the projections 56 of the left case 412L. The handhold 46 is further turned in the R' direction in such a manner that the second projecting portions 542 ride over the projections 56 while deforming them, to reach positions each shown by a two-dotted chain line in FIG. 22, that is, position over the projections 56. The handhold 46 is thus contained at a specific position along the case 412. In this way, when the handhold 46 is raised or tilted, a feeling of resistance (click feeling) due to riding over the projections 56 is transmitted to the user's hand, it is possible to ensure the realization of having positively operated the handhold 46, and to stabilize the containing state of the handhold 46. It is to be noted that FIG. 18 shows a perspective view of the left case 412L in the state in which the handhold 46 has been contained.

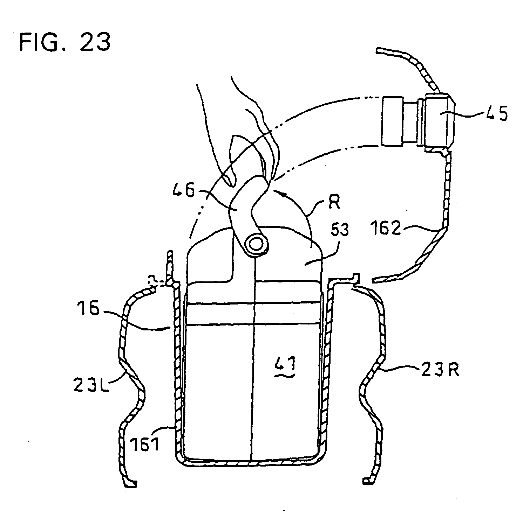

FIGS. 22 and 23 are transverse sectional views of the rear frame showing the state of the battery mounted in the battery box, wherein FIG. 12 shows the state in which the lid is closed, and FIG. 13 shows the state in which the lid is opened. The battery box 16 is disposed between the left portion 23L and the right portion 23R of the rear frame 23, and the battery 41 is contained in the battery box 16. The battery box 16 is supported on the seats 234, 235, and 236 formed on the upper portion of the rear frame 23 with its longitudinal direction extending along the longitudinal direction of the vehicular body. The battery box 16 includes a box main body 161 with its upper portion opened for allowing the battery 41 to be removably mounted in the battery box 16 from above, and a lid 162 for covering the opened upper portion of the box main body 161. The lid 162 is turnably mounted to the box main body 161 by using a hinge (not shown) so as to be turnable and opened sideways of the vehicular body.

The lid 162 has a key unit 45. The key unit 45 has a claw 451 allowed to be moved in and out by turning a key (which may be common to a key for operating a power supply switch). The claw 451 is engaged with an upper end of the box main body 161 to be locked therewith.

In the state in which the battery 41 is contained in the battery box 16, as shown in FIG. 22, the handhold 46 can be turned in the R' direction in such a manner as to avoid the key unit 45 provided on the lid 162, to be tilted on the opposed side to the key unit 45. In the state in which the handhold 46 is tilted, since the U-shaped open side of the U-shaped handhold 46 is positioned on the key unit 45 side, the locus of the key unit 45 at the time of opening/closing the lid 162 passes through the open side of the handhold 46. Accordingly, the key unit 45 can be compactly contained in the recess formed at the upper corner portion of the battery 41 without interference with the handhold 46.

On the other hand, as shown in FIG. 23, in the case of taking the battery 41 out of the battery box 16, the lid 162 is opened rightward of the vehicular body, and the handhold 46 is turned in the R direction (leftward of the vehicular body) to be thus raised in order for a user to easily catch the handhold. For a user standing on the left side of the vehicular body, since the lid is opened rightward and the handhold is turned leftward substantially in the same direction as the pull-up direction of the battery, it is very easy to put the battery in the battery box 16 or pull the battery upward therefrom. In the state in which the handhold 46 is raised, since the key unit 45 interferes with the handhold 46, the lid 162 cannot be closed. Further, since the first projecting portions 541 are brought into contact with the stopper walls 55 to limit the turning of the handhold 46, it is impossible to forcibly close the lid 162. In this way, each operation, for example, the operation with a click feeling can be positively performed, and accordingly, it is possible to suitably mount or dismount the battery 41 in or from the battery box 16.

Hereinafter, the third embodiment will be described with reference to FIGS. 1, 4, 5 and 24 through 32. As the explanation relating to the motor-assisted bicycle shown in Fig. 1 is same as that of the First embodiment, the explanation will be omitted.

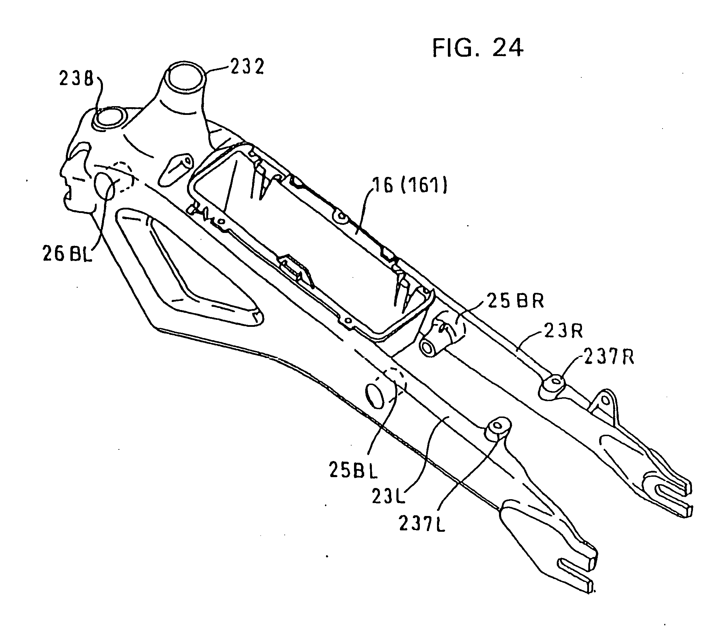

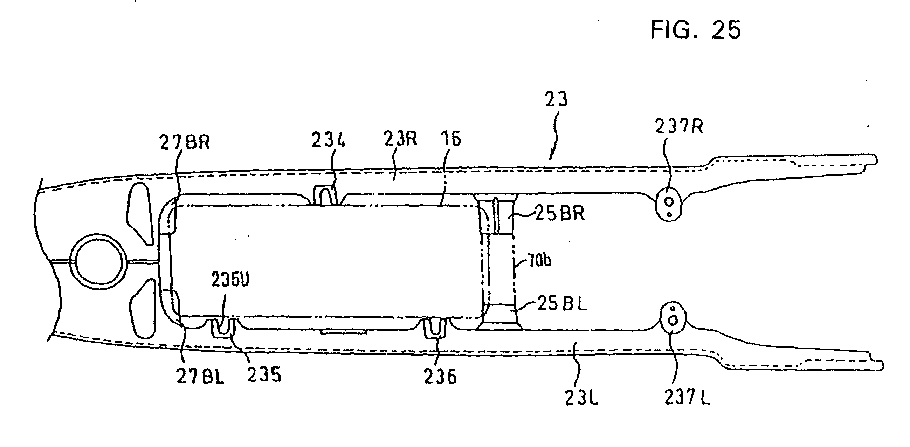

FIG. 24 is a perspective view, seen from the left front side of the vehicular body, showing the rear frame 23, and FIG. 25 is a plan view of the rear frame 23. As shown in these figures, the rear frame 23 is composed of a left portion 23L and a right portion 23R. The left portion 23L has bosses 25BL and 27BL in which the bolts 25 and 27 are insertable, and the right portion 23R has bosses 25BR and 27BR in which the bolts 25 and 27 are insertable. Each of the left and right portions 23L and 23R is also provided with a boss in which the bolt 26 is insertable (only the boss 26BL on the left side is shown in FIG. 2). The portions 70a and 70b (also see FIG. 4) formed on an upper end of the assist unit 1 are held between the bosses 25BL and 25BR and between the bosses 27BL and 27BR.

Seats 234, 235 and 236 for mounting the battery box 16, and seats 237L and 237R for mounting the rear brake 10 are formed on the upper surface of the rear frame 23. A mounting seat 238 for mounting a power supply switch adapted to supply a current from the battery to the assist unit 1 and the like is formed on the upper surface of the rear frame 23 at a position in front of the boss 232 for the seat post.

FIG. 4 is a side view of an essential portion of the assist unit 1, illustrating a relationship among mounting positions of the rear frame 23, the battery box 16, and the motor-assist unit 1. Referring to FIG. 4, hangers 70a and 70b for connecting the motor-assist unit 1 to the rear frame 23 are formed on the peripheral portion of a case main body 70 of the assist unit 1. The assist unit 1 is suspended from the rear frame 23 by fastening the hangers 70a and 70b to the rear frame 23 with the bolts 25 and 27.

A leg-power input gear 30 is connected to the crankshaft 1 via a one-way clutch (not shown). The leg-power input gear 30 is meshed with a small gear 31a of a composite gear 31. On the other hand, a large gear 32a of an assist power gear (which is hereinafter referred to simply as "assist gear") 32 is meshed with a pinion 29 of the motor M. A small gear 32b rotating together with the large gear 32a is meshed with a large gear 31b of the composite gear 31. The large gear 31b of the composite gear 31 is meshed with an output gear 34 fixed to a shaft of a drive sprocket 33. The case main body 70 of the assist unit 1 and the assist gear 32 may be each desirable to be formed of a resin molded product for reducing the weight thereof. The assist gear 32 may be configured as a helical gear from the viewpoint of silence and the like.

In this way, the rotation of the motor M is transmitted to the composite gear 31 via the pinion 29 and the assist gear 32, and the leg-power inputted from the crankshaft 11 is transmitted to the composite gear 31 via the leg-power input gear. The leg-power and the assist power are combined with each other at the composite gear 31, and the resultant power is transmitted to the drive sprocket 33 and is further transmitted to the rear wheel WR via the chain 15. A controller 37 disposed in a front portion of the case 70 controls the rotation of the motor M on the basis of a value of leg-power inputted from leg-power detecting means (not shown).

A pivot 36 for turnably supporting a main stand 35 is mounted to a lower portion of the rear side of the main body case 70. The pivot 36 is formed of an aluminum molded product. A projection 70c provided at a lower end of the main body case 70 is a foot portion for allowing self-standing of a rear portion of the bicycle containing the rear frame 23 when the front frame 22 and the rear frame 23 are separated from each other. When the rear portion of the bicycle is placed on the ground, it can self-stand by means of the projection 70c and the rear wheel WR.

A lock pin 39 having a lock lever 38 is inserted in two bosses 28 provided at the front end of the rear frame 23. A bolt 391 is provided in such a manner as to be turnable around the lock pin 39, and a nut 392 is screwed with the bolt 391. The bolt 391 is made to pass through a groove of an engagement portion 40 projecting from the front frame 22, and one plane of the nut 392 is brought into contact with the engagement portion 40, to form a fastening plane.

A central portion, to which the bolt 391 is mounted, of the lock pin 39 has an eccentric shape being offset from a common hole of the bosses 28, so that the contact strength between the fastening plane of the nut 392 and the engagement portion 40 can be increased or decreased by turning the lock lever 38. The maximum value of the contact strength between the fastening plane of the nut 392 and the engagement portion 40 can be determined on the basis of the turning amount of the nut 392. In the state in which the lock lever 38 is turned to a position along the rear frame 23 as shown in the figure, the nut 392 is forcibly brought into contact with the engagement portion 40 to forcibly connect the front frame 22 to the rear frame 23.

On the other hand, when the lock lever 38 is turned in the direction where it is separated from the rear frame 23, that is, in the direction perpendicular to the vehicular body, since the lock pin 39 has the eccentric shape, the nut 392 is offset in the direction where it is separated from the engagement portion 40 (that is, toward the front portion of the vehicular body) by a distance corresponding to the eccentric amount of the lock pin 39, to weak the contact strength between the nut 392 and the engagement portion 40. By turning the bolt 391 around the lock pin 39 in the state in which the contact strength is weakened, the engagement between the nut 392 and the engagement portion 40 can be released, whereby the front frame 22 and the rear frame 23 can be folded around the hinge 24.

A power supply switch 50 operable with a key K is mounted to the mounting seat 238 (see FIG. 24) which is provided on the front portion of the rear frame 23, that is, on the front side of the boss 232 for holding the seat post.

FIG. 5 is a perspective view, with an essential portion cutaway, showing a structure of the battery. As shown in the figure, a battery 41 includes a battery main body 411 (for example, composed of a stack of 20 pieces of nickel-hydrogen cells) wrapped with a package 410 formed of a shrink film, and a two divided battery case (which is hereinafter referred to simply as "case") 412 for containing the battery main body 411. The case 412 is formed of a resin molded product. The case 412 is provided with an indicator 42 which turns on one or more of a plurality of LEDs and indicating the remaining capacity of the battery with the number of the turned-on LEDs; a connector 43 for charging the battery; and a fuse 44. A handhold 46 for carrying or mounting/dismounting the battery 41 is turnably mounted to the.case 412. Two terminals 47 connected to the battery main body 411 are provided on a bottom of the case 412.

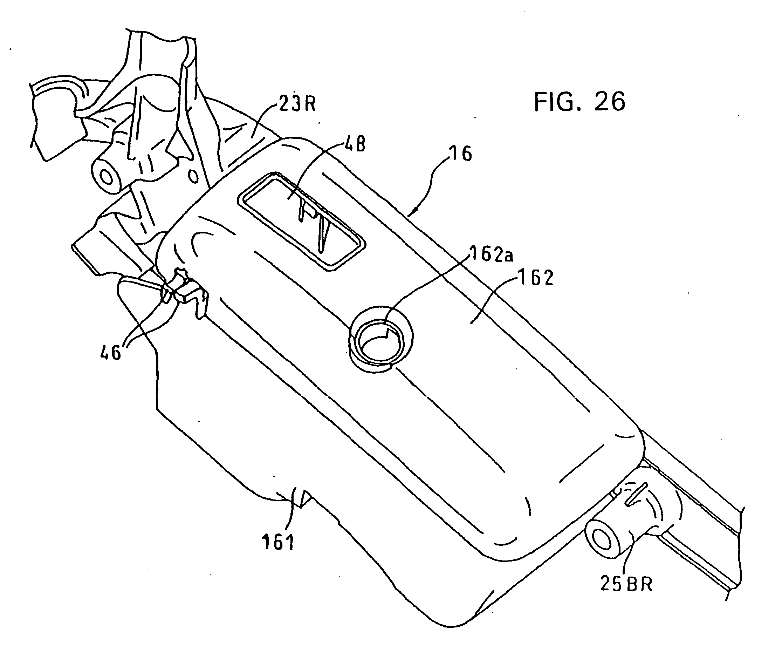

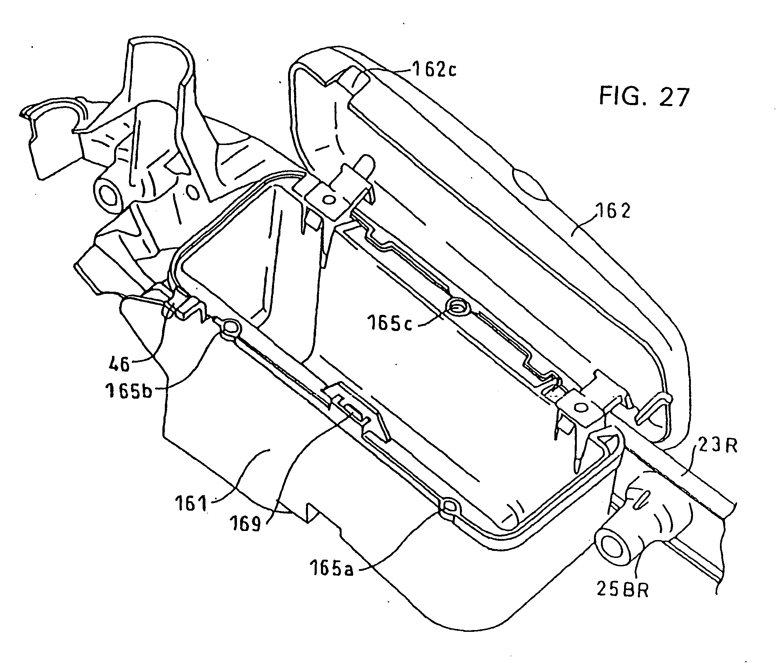

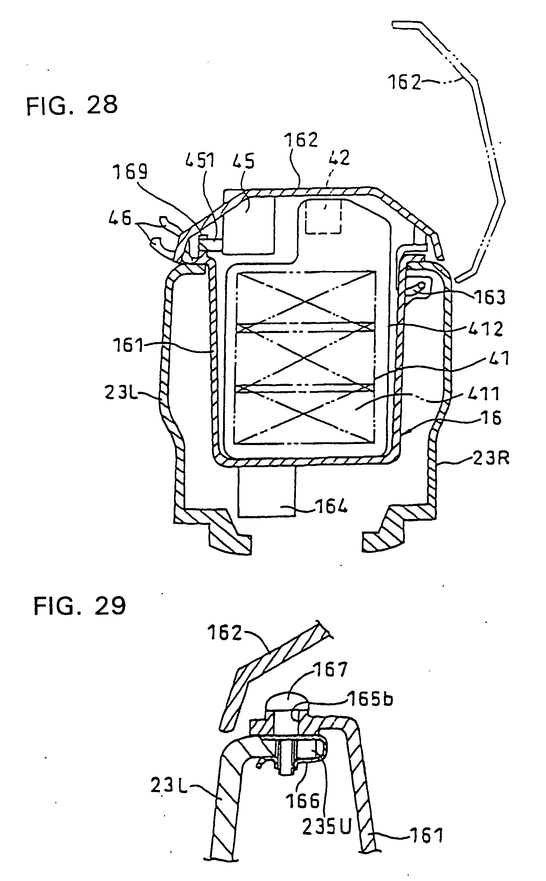

FIG. 26 is a perspective view of an appearance of the battery box 16; FIG. 27 is a perspective view showing a state in which the lid is opened; and FIG. 28 is a sectional view taken on line A-A of FIG. 4. Each of FIGS. 26 and 27 shows the right member 23R of the rear frame 23 in addition to the battery box 16. Referring to these figures, the battery box 16 is contained between the right member 23R and the left member 23L in such a manner as to extend along the rear frame 23 with its longitudinal direction corresponding to the longitudinal direction of the vehicular body. The battery box 16 is supported by the rear frame 23 while being placed on the seats 234, 235 and 236, and is fastened to the rear frame 23 by means of bolts (to be described later) which have passed through, from above, three holes 165a, 165b and 165c formed in the battery box 16 at positions corresponding to U-grooves formed in the seats 234, 235 and 236. The details of the above fastening portions will be described later.

The battery box 16 includes a box main body 161 having an upper portion opened for allowing the battery to be removably mounted, from above, in the battery box 16, and a lid 162 for covering the opened upper portion of the box main body 161. The lid 162 is turnably mounted to the box main body 161 by using hinges 163 in order to be turned and opened sideways of the vehicular body. The state in which the lid 162 is opened is shown by a two-dot chain line in FIG. 28. In this embodiment, since the box main body 161 is disposed with its longitudinal direction extending along the longitudinal direction of the vehicular body, the opening of the upper portion of the box main body 161 becomes wide as compared with the case where the box main body is disposed with its longitudinal direction extending substantially in the vertical direction, to thereby facilitate the operation of mounting/dismounting the battery 41.

The lid 162 has a window 48 through which a driver can observe the indicator 42, and a key unit 45. As shown in FIG. 26, the lid 162 also has a hole 162a through which the driver can lock or unlock the key unit 45 from external. The key unit 45 has a claw 451 allowed to be moved in or out by turning a key (which may be common to a key for operating the power supply switch). By engaging the claw 451 with a hook 169 provided on the upper end of the box main body 161, the lid 162 is locked with the box main body 161.

The battery 41 is contained in the box main body 161, and a terminal box 164 is formed on a bottom of the box main body 161. The terminal box 164 contains two terminals (not shown) connected to two terminals 47 on the battery 41 side. A pair of members 46 are provided on an upper portion of the box main body 161. The members 46 are allowed to project sideways from a cutout 162c formed in an edge portion of the lid 162. The members 46 are used as receiving members for holding the lock lever 38 at a position along the rear frame 23.

The fastening portions for fastening the battery box 16 to the rear frame 23 will be described in detail below. FIG. 29 is a sectional view of an essential portion of the left member 23L of the rear frame 23. Referring to this figure, the edge portion of the box main body 161 is placed on the seat 235 of the left member 23L. The seat 235 has a U-groove 235U (the shape thereof is also shown in FIG. 25) cutout from the inside of the vehicular body, and a clip nut 166 is disposed in such a manner as to hold, from above and below, the seat 235 containing the U-groove 235U portion.

A bolt 167, which is inserted, from above, in the above-described hole 165b of the box main body 161, passes through a hole of an upper portion of the clip nut 166 and the U-groove 235U, and reaches a lower portion, that is, a nut portion of the clip nut 166. The bolt 167 is screwed in the nut portion of the clip nut 166, to thereby rigidly fix the box main body 161 to the rear frame 23. The clip nut 166 is a nut integrated with a washer. The use of such a clip nut 166 is effective to facilitate the assembly of the box main body 161 to the rear frame 23 even if the rear frame 23 is as die-cast, more specifically, not subjected to any additional machining of a hole or the like. The other fastening portions for fastening the box main body 161 to the rear frame 23, which include the holes 165a and 165c and the seats 235 and 236, can be configured as described above.

In the state in which the lid 162 is closed, since the above-described three fastening portions are covered with the lid 162, it is possible to enhance the external appearance. As an additional effect, since the right and left members 23R and 23L of the rear frame 23 are connected to each other via the box main body 161, it is possible to increase the rigidity of the rear frame 23 at such a portion. As a further additional effect, since a side wall of the box main body 161 closes an approximately triangular hole (see FIGS. 1 and 24) formed in the widened portion of the rear frame 23, it is possible to further enhance the external appearance.

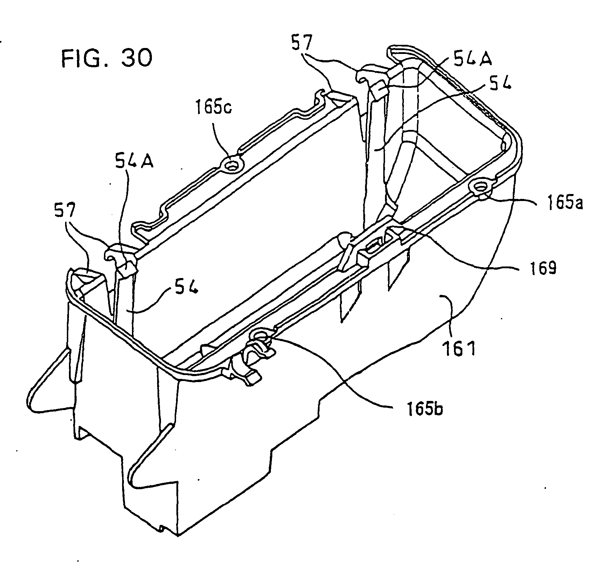

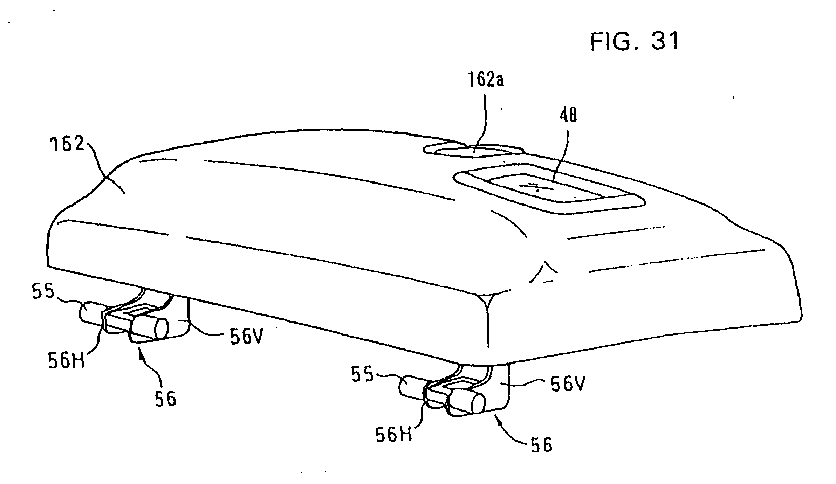

The structure of the connecting portion between the lid 161 including the hinges 163 and the box main body 161 and its neighborhood will be described below. FIG. 30 is a perspective view, seen from the left, front side of the vehicular body, of the box main body of the battery box, and FIG. 31 is a perspective view, seen from the right, front side of the vehicular body, of the lid of the battery box.

Referring to FIG. 31, the lid 162 has pins 55 functioning as turning centers (pivots) around which the lid 162 is turnable so as to be opened/closed sideways of the vehicular body. The pins 55 are provided at two points separated from each other in the longitudinal direction of the lid 162. Each pin 55 is connected to the lid 162 via a bracket as a connecting member. The bracket 56 has a vertical portion 56V extending downwardly from the lid 162 and a horizontal portion 56H extending horizontally from the vertical portion 56V. The pin 55 is formed at a leading end of the horizontal portion 56H of the bracket 56 in such a manner as to project rightward and leftward from the horizontal portion 56H in the longitudinal direction of the lid 162 (in the longitudinal direction of the vehicular body). The bracket 56 is positioned such that the vertical portion 56v faces to arm 54 to be described later.

Referring to FIG. 30, the box main body 161 has two sets of bearings 57 in which the pins 55 of the lid 162 are to be fitted. Each set of bearings 57 have a pair of bearing portions for rotatably supporting both ends of the pin 55. The bearing portions have an upper jaw and a lower jaw for supporting, from above and below, the pin 55.

Locking members for locking a side surface of the battery 41, which has been contained in the box main body 161, are provided on one inner side wall of the box main body 161. To be more specific, two arms 54 extending in the height direction of the box main body 161 are provided on the right and left sides of the box main body 161 in the longitudinal direction.

The arm 54 is kept in such a cantilever manner that a lower end thereof is held on a bottom surface of the box main body 161 and an upper end thereof is taken as a free end flexible inward or outward of the box main body 161 within its elastic limit. In a state in which the lid 162 is opened, the arms 54 are offset toward the inner side wall of the box main body 161, and when the lid 162 is closed, the arms 54 are pushed inward by the hinges 163, to be engaged with the side surface of the battery 41. The arms 54 may be molded integrally with the box main body 161. Alternatively, the arms 54 may be molded separately from the box main body 161 and be integrated therewith by means of screws or adhesive.

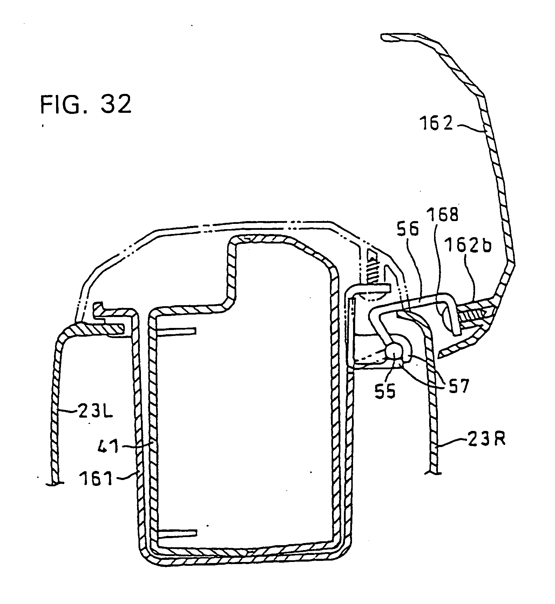

FIG. 32 is a sectional view of an essential portion of the battery box. Referring to this figure, leading ends of the brackets 56 extending from the pins 55 turnably supported by the bearings 57 are connected to bosses 162b projecting from a bottom surface of the lid 162 by means of lockscrews 168.. The shape of the bracket 56 and a positional relationship between the right member 23R and the pin 55 are determined such that when the lid 162 is opened/closed, an edge 162E of the lid 162 can be deformed substantially along an upper surface of the right member 23R and the bracket 56 is not brought into contact with an upper end of the right member 23R. At the same time, the shape of the bracket 56 and the positional relationship between the right member 23R and the pin 55 are determined such that when the lid 162 is closed, the back portion of the bracket 56, that is, the vertical portion 56V pushes the arm 54 inward of the box main body 161.

The pushed arm.54 is engaged in a recess 41R formed in the side surface of the battery 41. Accordingly, in the state in which the lid 162 is closed, the arms 54 are pushed by the back surfaces of the brackets 56 so as not be retreated, whereby the battery 41 is locked so as not be moved in the box main body 161. The locking state of the battery 41 is thus kept. On the other hand, when the lid 162 is opened, since the back surfaces of the brackets 56 are separated from the arms 54, the battery 41 can be pulled up.

As is apparent from the above description, since the battery can be held in the battery box by the lock means, the lid is not required to have a large strength and a large rigidity.

Furthermore, the mounting or dismounting of the battery to or from a motor-assisted bicycle can be performed by a user standing along the vehicular body, and since the battery is only placed in the horizontal direction, and more specifically, the battery is not required to inserted in or removed from a vertically-elongated containing portion, it is possible to enhance the operability.

Moreover, by opening/closing the upper lid, the arm portion is deflected and restored by the connecting portion for supporting the lid to be engaged with or released from the battery. When the arm portion is engaged with the battery, the battery can be positively held in the battery box.

Moreover, the battery containing device having the handhold turnable for enhancing the operability can be compactly contained in the battery box to be thus mounted on a vehicular body. In particular, in the case where the key unit is provided on the upper lid of the battery box, the handhold can be turned to a position at which the handhold can avoid the key unit, to be suitably contained in the battery box. Further, since the turning range of the handhold can be clearly specified, it is possible to positively operate the handhold. If the handhold is erroneously operated or uncertainly operated, such operation can be sensitively recognized. For example, in such a case, a specific click feeling cannot be obtained, or the upper lid cannot be closed.

As is apparent from the above description, according to the invention described in claims 1 to 4, since the mounting portions for connecting the battery box to the frame of the vehicular body are covered with the upper lid and also the battery box main body and the hinges for supporting the upper lid on the battery box main body are covered with the frame of the vehicular body, it is possible to improve the external appearance of the vehicular body.

## Claims

1. A motor-assisted bicycle having a box for containing a battery, which is used for mounting, on a vehicular body, a battery (41) including a battery main body (411) contained in a battery case (412), said box (16) comprising:
a box main body (161) for holding said battery (41);
mounting portions (165a, 165b, 165c) for connecting said box main body (161) to the vehicular body, the mounting portions (165a, 165b, 165c) comprising holes (165a, 165b, 165c) and being connected to the vehicular body by bolts (167), and
an upper lid (162) for covering an upper opening of said box main body (161),
**characterized in that**
said mounting portions (165a, 165b, 165c) extend in the plane of the upper opening of said box main body (161) and **in that** said upper lid (162) covers said mounting portions (165a, 165b, 165c) and said bolts (167).

2. A motor-assisted bicycle having a box for containing a battery according to claim 1, wherein said box main body (161) is provided with a flange which projects at least rightward and leftward from said upper opening of said box main body (161) so as to engage with upper surfaces of a pair of right and left frame portions (23R, 23L) constituting part of the vehicular body; and wherein said flange is screwed to said frame portions (23R/23L) by means of said bolts (167).

3. A motor-assisted bicycle having a box for containing a battery according to claim 2, wherein said box main body (411) is mounted on said frame portions (23R, 23L) in such a manner that side surfaces of said box main body (411) face to widened portions of said frame portions (23R, 23L) in a side view, each of said widened portions having a height being nearly equal to a depth of said box main body.

4. A motor-assisted bicycle having a box for containing a battery according to claim 2 or 3, wherein said upper lid (162) is supported by hinges (163) provided on one side of said box main body (161) in such a manner as to be openable/closable sideways of the vehicular body; and said hinges (163) are located under an upper edge of said box main body (161) while being offset inward of said frame portions (23R, 23L).

## Patentansprüche

1. Motorunterstütztes Fahrrad mit einem Kasten zur Aufnahme einer Batterie, welcher dafür verwendet wird, an einem Fahrzeugkörper eine Batterie (41) zu montieren, welche einen in einem Batteriegehäuse (412) enthaltenen Batteriehauptkörper (411) umfasst, wobei der Kasten (16) umfasst:
einen Kastenhauptkörper (161) zum Halten der Batterie (41);
Montageabschnitte (165a, 165b, 165c) zur Verbindung des Kastenhauptkörpers (161) mit dem Fahrzeugkörper, wobei die Montageabschnitte (165a, 165b, 165c) Löcher (165a, 165b, 165c) umfassen und mit dem Fahrzeugkörper durch Bolzen (167) verbunden sind, und
einen oberen Deckel (162) zum Abdecken einer oberen Öffnung von dem Kastenhauptkörper (161),
**dadurch gekennzeichnet,**
**dass** sich die Montageabschnitte (165a, 165b, 165c) in der Ebene von der oberen Öffnung von dem Kastenhauptkörper (161) erstrecken und dass der obere Deckel 162 die Montageabschnitte (165a, 165b, 165c) und die Bolzen (167) abdeckt.

2. Motorunterstütztes Fahrrad mit einem Kasten zur Aufnahme einer Batterie gemäß Anspruch 1, wobei der Kastenhauptkörper (161) mit einem Flansch versehen ist, welcher von der oberen Öffnung von dem Kastenhauptkörper (161) wenigstens nach rechts und links vorsteht, um mit oberen Flächen von einem Paar von rechten und linken Rahmenabschnitten (23R, 23L) in Eingriff zu treten, welche Teil des Fahrzeugkörpers bilden; und wobei der Flansch durch die Bolzen (167) an die Rahmenabschnitte (23R/23L) geschraubt ist.

3. Motorunterstütztes Fahrrad mit einem Kasten zur Aufnahme einer Batterie gemäß Anspruch 2, wobei der Kastenhauptkörper (411) an den Rahmenabschnitten (23R, 23L) in einer solchen Weise montiert ist, dass seitliche Flächen von dem Kastenhauptkörper (411) in einer Seitenansicht zu erweiterten Abschnitten von den Rahmenabschnitten (23R, 23L) weisen, wobei jeder der erweiterten Abschnitte eine Höhe hat, welche annähernd einer Tiefe von dem Kastenhauptkörper entspricht.

4. Motorunterstütztes Fahrrad mit einem Kasten zur Aufnahme einer Batterie gemäß Anspruch 2 oder 3, wobei der obere Deckel (162) durch Scharniere (163) gelagert ist, welche auf einer Seite von dem Kastenhauptkörper (161) derart vorgesehen sind, dass sie seitlich des Fahrzeugkörpers öffenbar/schließbar sind; und die Scharniere (163) unter einem oberen Rand von dem Kastenhauptkörper (161) angeordnet sind, während sie von den Rahmenabschnitten (23R, 23L) nach innen versetzt sind.

## Revendications

1. Bicyclette à assistance motorisée comprenant un coffre destiné à contenir une batterie, qui est utilisé pour le montage, sur un corps de véhicule, d'une batterie (41) comprenant un corps principal de batterie (411) contenu dans un carter de batterie (412), ledit coffre (16) comprenant:
un corps principal de coffre (161) destiné à maintenir ladite batterie (41) ;
des parties de montage (165a, 165b, 165c) destinées à connecter ledit corps principal de coffre (161) au corps de véhicule, les parties de montage (165a, 165b, 165c) comprenant des orifices (165a, 165b, 165c) et étant connectées au corps de véhicule au moyen de boulons (167) ; et
un couvercle supérieur (162) destiné à recouvrir une ouverture supérieure dudit corps principal de coffre (161),
**caractérisée en ce que**:
lesdites parties de montage (165a, 165b, 165c) s'étendent dans le plan de l'ouverture supérieure dudit corps principal de coffre (161) et **en ce que** ledit couvercle supérieur (162) recouvre lesdites parties de montage (165a, 165b, 165c) et lesdits boulons (167).

2. Bicyclette à assistance motorisée comprenant un coffre destiné à contenir une batterie selon la revendication 1, dans laquelle ledit corps principal de coffre (161) comporte une bride qui est en saillie au moins vers la droite et vers la gauche à partir de ladite ouverture supérieure dudit corps principal de coffre (161) de manière à s'engager avec des surfaces supérieures d'une paire de parties de cadre droite et gauche (23R, 23L) qui constituent une partie du corps de véhicule, et dans laquelle ladite bride est vissée sur lesdites parties de cadre (23R, 23L) au moyen desdits boulons (167).

3. Bicyclette à assistance motorisée comprenant un coffre destiné à contenir une batterie selon la revendication 2, dans laquelle ledit corps principal de coffre (411) est monté sur lesdites parties de cadre (23R, 23L) de telle sorte que des surfaces latérales dudit corps principal de coffre (411) font face à des parties élargies desdites parties de cadre (23R, 23L) en vue latérale, chacune desdites parties élargies ayant une hauteur qui est approximativement égale à une profondeur dudit corps principal de coffre.

4. Bicyclette à assistance motorisée comprenant un coffre destiné à contenir une batterie selon la revendication 2 ou la revendication 3, dans laquelle ledit couvercle supérieur (162) est supporté par des articulations (163) aménagées sur un côté dudit corps principal de coffre (161) de manière à pouvoir être ouvert / fermé sur un côté du corps de véhicule, et dans laquelle lesdites articulations (163) sont disposées en dessous d'un bord supérieur dudit corps principal de coffre (161) tout en étant décalées vers l'intérieur desdites parties de cadre (23R, 23L).
